# EUROPEAN PATENT APPLICATION

(11) **EP 1 416 256 A1**
(43) Date of publication of application: **06.05.2004**
(21) Application number: 03078229.6
(22) Date of filing: 13.10.2003
(51) Int. Cl.: G01G 13/00, G01G 15/00, G01G 17/00, G01G 21/00, G01G 23/00, B07C 5/16, B65G 47/00, B07C 5/04

(54) **Container for collecting rejected articles in a weight checking machine**

(30) Priority: 04.11.2002 IT RE20020084
(71) Applicant: Thermo Ramsey Tecnoeuropa S.R.L., 43100 Parma (IT)
(72) Inventor: Cavatorta, Daniele, Thermo Ramsey Tecnoeuropa SRL, 43100 Parma (IT)
(74) Representative: Corradini, Corrado

(57) **Abstract**

Container for a weight checking machine having a lower region (22) for collecting rejected articles and a reception mouth (21), and being characterised in that said reception mouth (21) is positioned to the side of and at the same level as the article lying on a feed line (13), in a position opposite and facing expulsion means (15), the container (20) also comprising a concave curved surface (23) arranged to accompany the rejected articles (9') into the collection region (22) and extending from the upper end of the reception mouth (21); the profile of the curved surface (23) being arranged to intercept the trajectory (A) of the article propelled by the expulsion means and to form with this trajectory a relatively small angle, and then to proceed downwards along a path such that the article slides in a manner substantially adhering to the surface (23) itself.

## Description

The present invention relates to weight checking machines for articles, comprising an article feed line and an expulsion means arranged to transversely propel individual articles sideways for their expulsion from the line as the result of a weight check, and further comprising a rejects collection container having a collection region and a reception mouth disposed in correspondence with the article expulsion point.

The present invention is applied to the processing of articles having a weight less than 1000 grams and a maximum dimension less than 400 mm; above said values, the application of the present invention becomes exceptional, although not excluded.

Moreover, the present invention finds its maximum usefulness in compact machines having a support frame to which both the weight measurement instrument and the rejects collection container are fixed.

A problem present in known machines is that propelling the rejected articles into the collection container inevitably causes impacts between the article and the side walls and/or bottom wall of the container and/or the other articles already present in the collection region, the vibrations of which reverberate through the common support frame and onto the measuring instrument, with consequent disturbance to its operation.

An object of the present invention is to provide a rejects collection container which, although being supported by the frame which also supports the weight measuring instrument, is able to considerably reduce the intensity of the impacts produced by the rejects propelled by the expulsion means into the interior of the collection container.

Another object of the present invention is to provide a collection container for the aforesaid purpose which is of simple and economical manufacture. These and further objects are attained by the invention as characterised in the claims.

The invention is based on the fact that the reception mouth of the collection container is positioned to the side of and at the same level as the feed line, in a position opposite and facing the expulsion means, the container also comprising, facing the expulsion means, a concave curved surface arranged to accompany the rejected articles into the collection region and extending from the upper end of the reception mouth, its profile in the vertical transverse plane being arranged to intercept the trajectory of the article propelled by the expulsion means and to form with this trajectory a relatively small angle, and then to proceed downwards along a path such that the article, by virtue of the kinetic thrust which it possesses, slides in a manner substantially adhering to the surface itself.

The reception mouth is disposed substantially vertical, the tangent to the initial end of the profile of the concave curved surface being virtually horizontal and disposed at a level higher than the level of the upper surface of those articles positioned at the expulsion point, the profile of the concave curved surface passing through a point in which the tangent is virtually vertical.

By virtue of the particular shape of said concave curved surface, the article propelled into the container by the expulsion means collides against said surface with a relatively small angle, i.e. an angle substantially less than 90° and preferably the smallest possible compatible with the trajectory which the article assumes; the article subsequently slides along the surface and, by virtue of the friction therewith, totally or partly consumes its energy before reaching the collection region, to hence substantially reduce the intensity of the impacts.

The invention is described in detail hereinafter with the aid of the accompanying figures which illustrate one embodiment thereof by way of non-exclusive example.

Figure 1 is a side view of the weight checking machine.

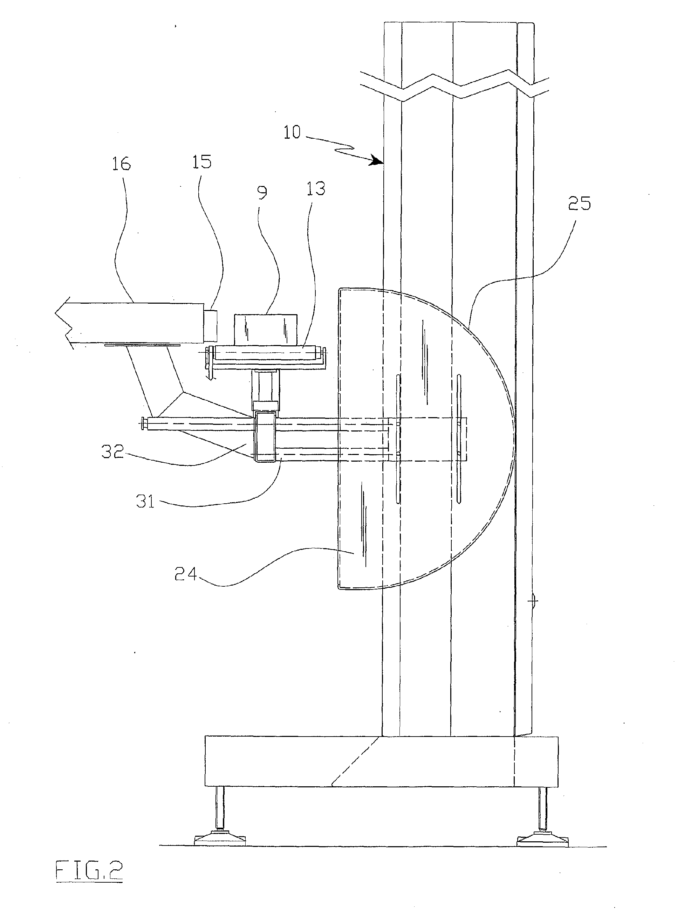

Figure 2 is a front view of Figure 1.

Figure 3 is an enlarged detail of Figure 2, the collection container being sectioned on the plane III-III of Figure 1.

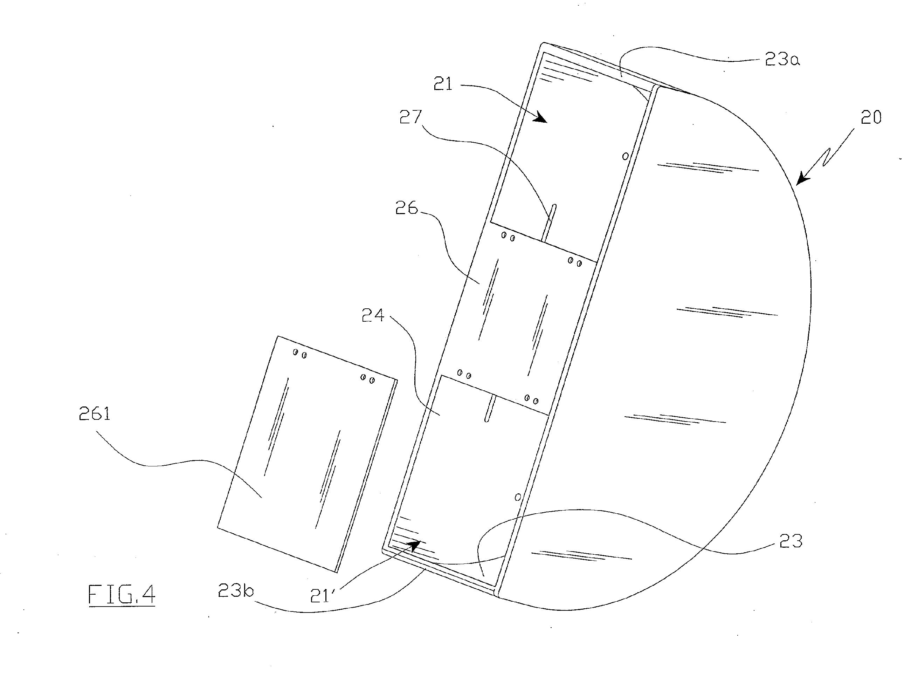

Figure 4 is a perspective view of the collection container alone.

The illustrated weight checking machine is of known type and comprises, for the articles being checked, a feed line composed of three successive short conveyor belts 11, 12, 13 driven by respective gearmotors 14. The first conveyor belt 11 acts as introduction to the second belt 12, with which there is associated an instrument for measuring the weight of the article transiting on it. The third conveyor belt 13 is positioned downstream of the second belt 12 and defines the expulsion zone for the rejected articles; with it there is associated an expulsion means, defined for example by a pusher element 15 operated by a cylinder-piston unit 16 (as shown in the figures) or by a blower means, by which the individual articles are propelled transversely and horizontally sideways for their expulsion from the line as a result of the weight checking action effected on the second conveyor belt 12.

To the side of the expulsion zone there is positioned a rejects collection container 20 having a lower region 22 where the rejected articles are collected, and a reception mouth disposed in correspondence with the article expulsion point, to the side of the third conveyor belt 13. Both the three conveyor belts 11, 12, 13, together with their relative members, and the collection container 20 are supported by a support frame 10 generally of vertically extending shape, by transverse arms 31, a longitudinal crosspiece 32 and other means.

According to the invention, the reception mouth of the collection container 20 is positioned to the side of and at the same level as the article lying on the feed line (i.e. on the third conveyor belt 13), in a position opposite and facing the position of the expulsion means, the collection container 20 comprising a concave curved surface 23 arranged to accompany the rejected articles into the collection region 22 and having its concavity facing the expulsion means 15.

The collection container 20 comprises two flat side walls 24, a curved bottom wall 25 the inner surface of which defines said concave curved surface 23, and a front wall 26 opposite the bottom wall 25.

According to a preferred (but not exclusive) embodiment, shown in the figures, the two flat side walls 24 are in the shape of a semicircle and the profile of the curved wall 25 defines a semi-circumference. Essentially the overall outer shape of the collection container 20 is that of a cylinder cut in half along an axial plane and is symmetrical about the horizontal axial plane.

In the front wall 26, which closes the interior of the container 20, there is provided an upper mouth occupying the upper end portion of the wall 26 and lying in a vertical (or nearly vertical) plane, to remain open and define the reception mouth 21; in the same wall 26 there is also provided, lying in a vertical (or nearly vertical) plane, a lower mouth 21' occupying the lower end portion of the wall 26 in correspondence with the lower region 22, and closed by a door 261 to define a closed region for collecting the rejected articles.

The concave curved surface 23 is connected to the reception mouth 21, and is prolonged downwards as far as the collection region 22; in particular, in the example shown in the figures, the surface 23 possesses two ends, an initial upper end 23a substantially mating with the upper end of the reception mouth 21, and a lower end 23b substantially mating with the lower end of the other mouth 21'; the tangent to the profile of the surface 23 at said two ends 23a and 23b is horizontal, whereas the tangent to the profile at the intermediate point thereof is vertical.

The concave curved surface 23 is arranged to intercept the trajectory of the article propelled by the expulsion means 15, its profile forming with said trajectory a relatively small angle, possibly very small, depending on the characteristics of the trajectory assumed by the article propelled by the means 15. This profile then continues downwards following a rounded path so that the article, by virtue of the kinetic thrust which it possesses, slides substantially adhering to the surface 23.

Besides being virtually horizontal, the tangent to the initial end of the profile of the concave curved surface 23 also lies at a higher level than the upper surface of the articles 9 positioned at the expulsion point, so that the reception mouth 21 is much greater than the rejected articles 9'.

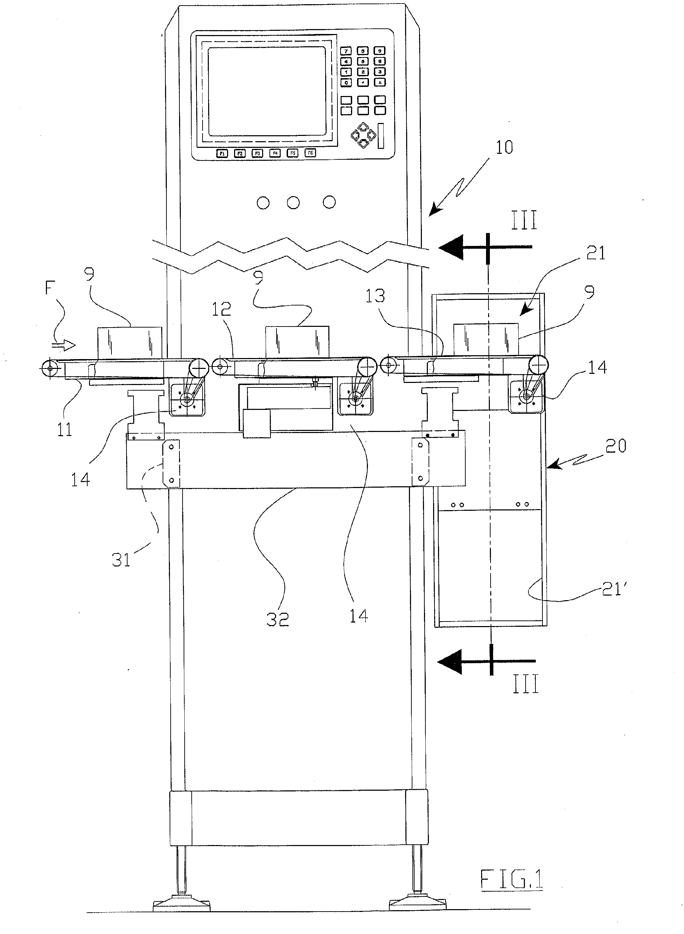

In operation, the articles 9 advance on the conveyors 11, 12 and 13 in the direction indicated by the arrow F of Figure 1.

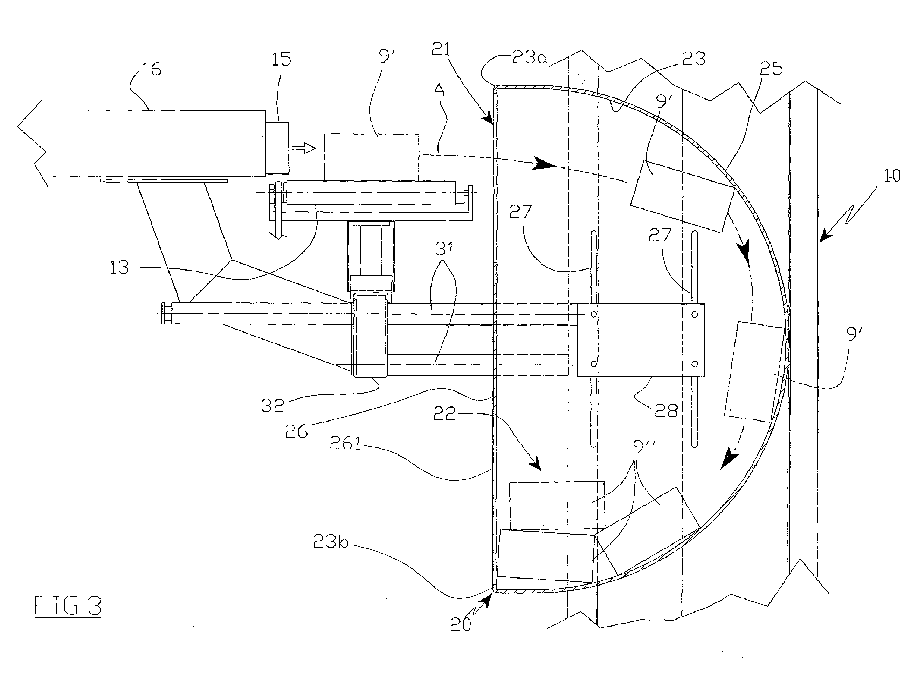

When an article 9' having a weight not falling within the scheduled parameters arrives on the third conveyor belt 13, it is propelled sideways by the pusher 15 into the collection container 20; the article 9' passes through the mouth 21 following a parabolic propulsion trajectory, indicated by A in Figure 3, which intercepts the surface 23 to form with its profile a relatively small angle (which in Figure 3 is of 15-25 degrees). After encountering the surface 23, the article 9' proceeds adhering to the surface 23, losing kinetic energy because of the friction during sliding, to finally reach the collection region 22 damped, so that impact with any other articles 9" already present will be softer.

In a side wall 24 the collection container 20 possesses a pair of slots 27 by which, by means of a plate 28, it is fixed vertically adjustable to a side of the machine frame 10.

Because of the symmetrical shape of the container 20, the container can be turned upside down to apply it to the other side of the frame 10, after moving the door 261 to close that mouth which is now in the lower position.

Numerous modifications of a practical and applicational nature can be made to the invention, but without leaving the scope of the inventive idea as claimed below.

## Claims

1. A container for collecting rejected articles in a weight checking machine, the machine comprising an article feed line (11, 12, 13), and an expulsion means (15) arranged to transversely propel individual articles (9') sideways for their expulsion from the line as the result of a weight check, the container (20) having a lower region (22) for collecting the rejected articles and a reception mouth (21) disposed in correspondence with the point at which the articles (9') are expelled, **characterised in that** the container (20) comprises, facing the expulsion means (15), a concave curved surface (23) arranged to accompany the rejected articles (9') into the collection region (22) and extending from the upper end of the reception mouth (21), the profile of said curved surface (23) in the vertical transverse plane being arranged to intercept the trajectory (A) of the article propelled by the expulsion means and to form with this trajectory a relatively small angle, and then to proceed downwards along a path such that the article, by virtue of the kinetic thrust which it possesses, slides in a manner substantially adhering to the surface (23) itself.

2. A container as claimed in claim 1, **characterised in that** the reception mouth (21) is positioned to the side of and at the same level as the article lying on the feed line (13), in a position opposite and facing the expulsion means (15).

3. A container as claimed in claim 2, **characterised in that** the reception mouth (21) is disposed substantially vertical, the tangent to the initial end of the profile of the concave curved surface (23) being virtually horizontal and disposed at a level higher than the level of the upper surface of those articles positioned at the expulsion point.

4. A container as claimed in claim 2, **characterised in that** the initial part of the profile of the concave curved surface (23) is in the shape of a circular arc and passes through a point in which the tangent is virtually vertical.

5. A container as claimed in claim 4, **characterised by** comprising two flat side walls (24) and a curved bottom wall (25), of which the inner surface defines said concave curved surface (23) and the profile defines a semi-circumference.

6. A container as claimed in claim 4, **characterised by** having a shape symmetrical about the horizontal axial plane.
